# EUROPEAN PATENT APPLICATION

(11) **EP 4 749 260 A1**
(43) Date of publication of application: **27.05.2026**
(21) Application number: 24215360.9
(22) Date of filing: 26.11.2024
(51) Int. Cl.: G01N 1/31, G01N 35/00, G01N 35/10

(54) **HANGING DROP COATING**

(71) Applicant: TECAN Trading AG, 8708 Männedorf (CH)
(72) Inventor: PIEHLER, Andreas, 7324 Vilters (CH); OTT, Philipp, 8496 Steg (CH)
(74) Representative: Troesch Scheidegger Werner AG

(57) **Abstract**

A method for coating a surface of a sample with a liquid using a pipettor in a laboratory automation apparatus, the sample having an elongated shape defining a longitudinal sample axis. The laboratory automation apparatus includes a work surface, a pipettor and a robotic arm. The pipettor includes a pipetting tip defining a longitudinal tip axis. The method includes the following steps: i) providing the sample on the work surface, ii) providing a hanging drop on the distal opening of the pipetting tip, iii) using the robotic arm for moving the pipetting tip to the location of the sample on the work surface and aligning the center of the hanging drop with the distal end of the sample. The sample is coated by moving the pipettor with the longitudinal tip axis perpendicular to the longitudinal sample axis such that the distal end of the sample contacts the hanging drop.

## Description

### FIELD OF THE INVENTION

The current invention relates to a method for coating a surface of a sample with a liquid using a pipettor in a laboratory automation apparatus. Furthermore, a laboratory automation apparatus enabled used for the method, and a computer program for carrying out the method are disclosed.

### BACKGROUND OF THE INVENTION

The chemical and physical properties of the surface of a material are different from the bulk properties and often modified. In numerous applications, the surface is modified to achieve the desired properties, for example to adjust the surface energy (e.g. hydrophobicity or hydrophilicity), the capability for binding molecules to the surface (e.g. adhesive properties), the optical properties, the electrical properties. The modification or functionalization of the surface may be used to attach molecules or species that normally would not, or only poorly adhere to the surface.

The surfaces are modified using a variety of processes such as chemical etching with acids, physical vapor deposition, coating technologies or plasma treatments. The surface area that needs to be modified may be miniaturized having dimensions in at least one direction within the micrometer range and the objects may be mechanically fragile leading to delicate handling of the objects during the surface treatment. Furthermore, it may be desired to modify the properties of the surface in a dedicated part of the surface only, and it may be desired to use different surface modifications in different parts of the surface requiring localized and miniaturized surface treatments or masking of the surface. Chemical or biological functionalization of the surface requires dedicated and chemically modified molecules which are available in small amounts and therefore expensive. It may be desired to reduce the waste of those expensive compounds.

A laboratory automation apparatus includes a pipettor for aspirating and dispensing liquids using a pipetting tip attached to the pipettor providing repetitive and automated liquid handling. A robotic arm moves the pipettor to a location on a work surface of the laboratory automation apparatus. WO2018015545A1 discloses a pipettor with an electrode providing a reference electrode with the work surface. A capacitive reference object is placed onto the work surface for calibration of, and accurate movement by the robotic arm across the work surface.

US20030205200A1 discloses an apparatus for dispensing small volumes of liquids onto substrates. The liquid is held in a tube that tapers to a bottom aperture and a fiber is axially moveable within the tube from a position within the tube for catching liquid, to a position beyond the aperture for micro-spotting of a droplet attached to the end of the fiber onto a substrate. The substrate is oriented perpendicular to the tube axis and the method uses contact dispensing of the liquid using the fiber.

WO1995035505A1 discloses a method for spotting droplets of a liquid onto a substrate by loading the liquid in a pipette tip, tapping the end of the pipette tip to the surface of the substrate, and dispensing the liquid using a dispensing device (contact dispensing). The meniscus of the liquid bridging the tip and the surface is fractured upon retraction of the pipette tip which is oriented perpendicular to the surface.

EP2450687A1 discloses a cantilever chip providing a sensing head for an atomic force microscope. The cantilever chip is positioned on a fluid channel such that liquid may flow below and parallel to the cantilever beam of the chip. Different liquid flow velocities are selected for determining the spring constant of the cantilever beam.

WO2021130339A1 discloses a kit-of-parts for attaching a biological object or species on a substrate such as a cantilever used in an atomic force microscope. A drop of the biological object is placed on the substrate. The cantilever is part of a sensor, and the surface may be functionalized first with positively charged poly-D-lysing followed by coating with negatively charged bacteria cells.

### DESCRIPTION OF THE INVENTION

The micro-spotting of droplets onto sample surface requires mechanical contact or mechanical impact to the substrate. There is a need for coating of substrate surfaces by local application of small amounts of liquids. There is a need for controlled and repetitive coating of substrate surfaces with small amounts of liquids avoiding mechanical impact to the substrate using automated methods.

It is an objective of the present invention to overcome the disadvantages of the prior art and provide and accurate, reliable, and automated method for coating a surface of a sample. Those objectives are solved by the method, by the laboratory automation apparatus, and by the computer program used for operating the laboratory automation apparatus as disclosed by the independent claims. Further exemplary embodiments are evident from the dependent claims and the following description including the Figures.

An aspect of the invention relates to a method for coating of a surface of a sample with a liquid using a pipettor in a laboratory automation apparatus. The sample and therewith the surface of the sample has an elongated shape defining a longitudinal sample axis. The laboratory automation apparatus includes a work surface and a robotic arm for moving the pipettor in a space above the work surface. The pipettor may include a tubular shaped pipetting tip with a distal opening for aspiration and dispensing of the liquid, the tubular shaped pipetting tip defines a longitudinal tip axis. The method includes the following steps:
- providing the sample on the work surface,
- providing a hanging drop on the distal opening of the pipetting tip using the pipettor, the hanging drop being aligned with the pipetting tip axis, e.g. the center of the hanging drop is essentially coinciding with the tip axis,
- using the robotic arm for moving the pipettor to the location of the sample on the work surface and lowering the pipettor such that the center of the hanging drop on the pipetting tip is flush or aligned with the distal end of the sample.

The sample is coated with the liquid by moving the pipettor with the longitudinal tip axis perpendicular to the longitudinal sample axis such that the distal end of the sample touches and punctures the hanging drop thereby immersing the surface of the sample into the drop. The distal end of the elongated sample approaches the center of the hanging drop. Alternatively, the sample is moved relative to the pipettor. The sample is immersed into the liquid of the drop. The liquid may subsequently flow over the sample surface. A plurality of surfaces of the sample may be immersed into the drop. The liquid may flow over a plurality of surfaces of the sample, for example over a top surface, a bottom surface or surfaces connecting the top surface to the bottom surface. The liquid may flow over the surface of a cylindrical shaped surface. The pipettor may be returned by the robotic arm to the position before starting the coating process and the surface may be allowed to dry.

In another embodiment, the sample is coated with the liquid by moving the pipettor with the longitudinal tip axis parallel to the longitudinal sample axis such that the distal end of the sample touches and punctures the hanging drop thereby immersing the surface of the sample at least partially in the liquid.

In another embodiment, the sample is coated with the liquid by moving the pipettor with the longitudinal tip axis tilted with respect to the longitudinal sample axis such that the distal end of the sample touches and punctures the hanging drop thereby immersing the surface of the sample at least partially in the liquid.

The coating may be a liquid coating or, after evaporation of a solvent, a solid coating. The sample may be a solid sample or a hollow sample. The surface of the sample may be flat, or curved and the surface may be smooth or roughened or textured. The sample may have inner surface outer surface intended to be coated and the sample may be hollow or solid.

The liquid may be aqueous or organic solvent based. The liquid may be a solution or a slurry and may include a solvent that is evaporated after application to the surface. The liquid may be a reactive liquid in that components in the liquid provide for a chemical reaction such as curing or crosslinking. The curing may be initiated after coating, for example by starting a radiation curing reaction or an initiator in the liquid is activated using radiation. An example may be a UV curing reaction. The liquid may include surfactants for changing the surface tension.

The elongate shaped sample may have a proximal end surface and/or a distal end surface and sidewalls connecting the proximal to the distal end surface. The proximal and/or distal end surfaces may be oriented perpendicular to the sample axis.

The pipettor may be an Air Displacement Pipettor (ADP) where air is displaced by means of a motor-driven piston in a cylinder for creating under/over pressure in the pipetting tip during liquid aspiration/dispensing. An example is disclosed in US8231842. Alternatively, a System Liquid filled system may be used. (Sys. Liqu.) where incompressible liquid in a tubing is displaced by means of a motor-driven syringe pump moving a piston of a syringe in a cylinder for creating under/over pressure in the pipetting tip during liquid aspiration/dispensing. An example is disclosed in CH702974A1. In a further alternative, an Air Restriction Pipettor (ARP) is used with a vacuum reservoir a pressure reservoir and a valve system for providing the under/over pressure in the pipetting tip, as disclosed in EP2569642A1.

The work surface defines an x-y plane or horizontal plane, and the robotic arm may move the pipettor in the x-y plane or in the z direction perpendicular to the work surface. The pipetting tip is coupled to the ADP/ARP system of the pipettor for aspirating/dispensing liquids from or into a reservoir or for providing the hanging drop used for coating the sample surface. The pipetting tip may be fixedly connected to the pipettor or the pipetting tip may be a disposable pipetting tip releasably connected to a distal end of the pipettor, for example to a pipetting head or pipetting adapter configured to engage a proximal end of the pipetting tip. The pipetting tip may be made from an at least partially electrically conductive material. The disposable pipetting tip may be made from a graphite or carbon filled polymer. The distal end or opening of the pipetting tip may be coated with a hydrophilic or hydrophobic coating.

Providing the sample on the work surface may include bringing or attaching the sample directly on the work surface. Alternatively, the sample is positioned on a sample carrier and the sample carrier is attached to the work surface. As another alternative, the sample surface is part of an analytical instrument that is placed onto the work surface. The sample to be coated may be placed in a container that may be filled with liquid before the coating process or after the coating process. The container is at least partially open for access to the pipetting tip of the pipettor.

Providing a hanging drop includes that a drop is still hanging on the distal end of the pipetting tip, thus liquid is first aspirated by the pipettor and then dispensed in a controlled manner such that a drop is still attached to the distal end or opening of the pipetting tip. The surface tension of the liquid and or surface properties of the distal end may be adjusted for creating the desired size, desired shape or stability of the hanging drop.

The robotic arm may move the pipettor to the x-y position for the location of the sample, or approximately to the location of the sample such that the distal end of the sample is flush with the droplet before moving the pipettor towards the sample surface. The position and accuracy of the robotic arm may be first calibrated by scanning of an optical or capacitive reference object present at a known position on the work surface as disclosed in WO2018015545A1.

The pipettor may be lowered by the robotic arm in a force-controlled manner. The pipettor may be lowered by the robotic arm with the center of the hanging drop distanced from the distal end of the sample, for example distanced from the vertical z-axis for lowering the pipettor at least by the external dimension or diameter of the pipettor, or at least by the external diameter or dimensions of of the distal opening of the pipetting tip thereby preventing collision between the distal end of the pipetting tip and the sample to be coated.

The sample is coated by immersion into the hanging drop, preferably followed by retraction of the sample from the hanging drop. The immersion and retraction occur in a sideways manner by relative movement in the horizontal plane between the pipettor and the sample. As an alternative, the centers of the drop and the sample axis are aligned along the same z -axis and lowering the pipettor (or raising the sample) results in immersion of the sample surface in the liquid. The coating using single drops facilitates a controlled coating and reduces the forces applied to the sample when applying the coating. The elongated sample may have a higher mechanical strength along the sample axis and by the controlled immersion the loads are applied in the direction of the highest strength of the sample. Additionally, only parts of a sample may be coated. The controlled coating procedure enables coating with a minimum amount of liquid thereby reducing waste of expensive liquids. Additionally, delicate and mechanically fragile samples may be coated without damaging the sample or the sample surface during the coating process when the sample is immersed into the drop or retracted from the drop. The hanging drop may facilitate coating with lower mechanical forces and mechanical impact compared to spotting of drops onto the sample surface or dripping of droplets onto the surface using contact dispensing.

The hanging drop used for coating of the surface is applied via a pipettor with a pipetting tip. The liquid may be a mixture of a plurality of components such as chemical or biological components. The bulk of the liquid may be a homogeneous mixture and the hanging drop may represent the composition of the homogeneous mixture. Alternatively, the hanging drop may have an inhomogeneous composition, for example certain surfactants or biological compounds (lipids or bacteria) may be concentrated at the surface of the hanging drop. As only a part of the hanging drop is used for coating, a concentration of certain components on the sample surface may be expected.

The elongate shaped sample may be a thin sample having an aspect ratio of at least 20, more preferably at least 50 most preferably at least 100. The hanging drop preferably touches the sample on a lateral end of the elongated sample. The elongated sample may bend easily or may be mechanically fragile in a direction perpendicular to the sample axis.

The elongate shaped sample may be selected from a spike, a beam, a cantilever, a rod, a rectangular plate, a film, a pin, a cone, a capillary, a pyramid, a triangle or a tube. There may be a plurality of elongate shaped samples that may be arranged in arrays and columns. The sample surface may be made by photolithographic processes and etching techniques to obtain micrometer-sized samples with micrometer sized sample surfaces. The sample may be made from silicon, a metal or a ceramic. The distal end of the sample may include the distal end surface of the beam or cantilever or rectangular plate or film. The distal end surface may include the apex or surface surrounding the apex of the spike or the apex of the pyramid or of the triangle. The distal end of the sample may include the distal end surface surrounding the opening of the tube. A sharp ending of the sample may promote puncturing the hanging drop. The end surface may be locally coated with a coating, for example a hydrophilic coating to improve the wettability and the sample surface and flow of the liquid across the surface from the distal end towards the proximal end. The elongate shaped sample may include a top surface, a bottom surface and a rim connecting the bottom to the top surface and wherein the distal end of the sample comprises a section of the rim.

The method wherein moving the pipettor to the location results in an intersection of the longitudinal tip axis and the longitudinal sample axis. The two axis provide a plane once the two axis intersect.

In an embodiment, the pipettor used in the method includes an electrode. The electrode may include the pipetting tip (which is preferably empty) or there may be a separate electrode attached to the pipettor or to the distal end of the pipettor. The electrode provides a capacitive sensor with a counter electrode such as, for example the work surface and the pipetting tip or separate electrode scans or hovers over the sample or the sample holder for detecting a change in capacitance for determining the exact location of the sample or sample holder. Scanning or hovering is defined as moving the electrode or end of the pipetting tip in one direction, for example the x-direction and detecting a change in capacitance for identifying for example the central sample axis. The electrode may hover along a perpendicular direction, for example the y-direction in a subsequent step for identifying the distal end of the sample. The coordinates of the sample may be used is the coating step where the hanging drop is provided at the distal end of the pipetting tip and the pipetting tip is moved by the robotic arm to the location of the distal end of the sample identified during the capacitive scanning step.

The method wherein the hanging drop is provided on the distal opening of the pipetting tip by aspirating and controlled dispensing of the liquid through the pipetting tip, preferably using the ADP, Sys. Liqu. pipettor or ARP pipettor.

In an embodiment, the hanging drop may have a target size for coating and may be first oversized with respect to the target size during controlled dispensing from the pipetting tip and subsequently reduced to the target size by partial aspiration. The oversized drop promotes wetting of the distal end of the pipetting tip before partial retracting the droplet into the pipetting tip thereby facilitating a uniform sized hanging drop that is centered and aligned with the pipetting tip axis. The target size of the droplet may range between 0.1 and 100 microliter, preferably between 0.5 and 50 microliter, most preferably between 1 and 10 microliter.

In an embodiment, the longitudinal sample axis is oriented parallel to the work surface. In another embodiment the longitudinal sample axis is oriented perpendicular to work surface. In yet another embodiment, the longitudinal sample axis is tilted with respect to the work surface.

In an embodiment, multiple coatings are subsequently applied on the sample surface wherein each of the multiple coatings is applied using the identical liquid for each coating, or wherein each of the multiple coatings is applied using a different liquid for each coating. The sample may be dried between each coating step. The liquid may be a biological liquid containing bacteria, enzymes, DNA or DNA fragments, RNA or RNA fragments or nucleic acids and the biological liquid may be applied to the surface previously coated with a dedicated adhesion layer. The adhesion may be based on chemical and/or physical bonding. An example of chemical bonding uses bridging molecules or tether molecules wherein one end is bonded to the surface and the other end is available for covalent binding to molecules available in the coating liquid. An example of the physical bonding uses the attractive forces between positive and negatively charged species. For example, a positively charged layer on the sample is available for binding negatively charged species. Poly-D-lysing (PDL) may provide a positively charged coating available for attachment of negatively charged bacterial cells.

Another aspect relates to a laboratory automation apparatus configured to carry out the method for coating a surface of the elongated sample with a liquid using the hanging drop attached to the pipetting tip of the pipettor.

Another aspect relates to a computer program enabling the coating of a surface of a sample with the liquid using the laboratory automation, the computer program when executed by the processor that is part of the laboratory automation apparatus is adapted to execute the method steps.

Another aspect relates to a computer readable medium in which the computer program is stored. The computer readable medium may be a disc, USB stick or a hard drive. The computer readable medium may be part of a cloud solution.

These and other aspects of the invention will be apparent from and elucidated with reference to the embodiments described hereafter. The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

### BRIEF DESCRIPTION OF THE DRAWINGS

Embodiments of the present invention are described in more detail with reference to the attached drawings presenting:
- Figure 1:: Laboratory automation apparatus,
- Figure 2:: Schematic drawing for a robotic arm positioned on the work surface of a laboratory automation apparatus,
- Figure 3:: Top view on the work surface of a laboratory automation apparatus with labware components, testing equipment and sample processing equipment,
- Figure 4:: Perspective view for a sensor or sensor chip as disclosed in prior art document WO2021130339A1, with a cantilever beam that needs to be coated,
- Figure 5:: Schematic drawing of a sensor chip with a sample holder and a sample,
- Figure 6:: Schematic drawings for elongate shaped samples,
- Figure 7:: Coating of the sample surface with a hanging drop, alignment of the drop with the sample,
- Figure 8:: Sideways immersion of the hanging drop (perpendicular orientation of the sample axis and the pipette tip axis into the elongated sample by relative movement between the pipette tip and the sensor,
- Figure 9:: Linear immersion of the hanging drop (alignment of the sample axis and the pipette tip axis) into the elongated sample by relative movement between the pipette tip and the sensor,
- Figure 10:: Tilted immersion of the hanging drop into the elongated sample; tilting of the sensor,
- Figure 11:: Tilted immersion of the hanging drop into the elongated sample; tilting of the pipetting tip,
- Figure 12:: Determination of the position of the sample to be coated and the sample axis using scanning of the sensor with a pipetting tip as an electrode providing a capacitive sensor with a reference electrode,
- Figure 13:: Block diagram presenting the method steps.

### DETAILED DESCRIPTION OF EXEMPLARY EMBODIMENTS

Definition: The distal end or distal direction is defined by the flow direction for the liquid, thus the distal tip of a pipette is defined by the outlet of the pipette tip and the proximal end is opposite to the distal end. The indefinite article "a" or "an" does not exclude a plurality. For example, "a sample" does not exclude the fact that there may be two samples or two parts that functionally or structurally fulfill the purpose of "a sample". In the claims, the word "comprising" does not exclude other elements or steps. Another wording for a pipetting head is a pipetting channel or tip adapter. A biological liquid may be a liquid containing molecules of biological origin such as proteins, bacteria, viruses, DNA or RNA. The molecules may be synthetic molecules having the same characteristics and structure of their biological counterparts such as synthetic DNA or RNA. A biological liquid may also be a liquid of biological origin such as blood, serum, sperm, sweat and the like.

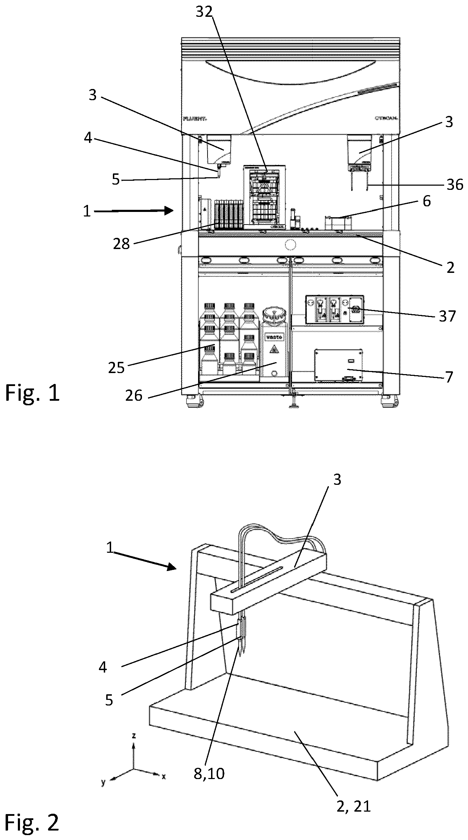

Figure 1 presents a laboratory automation apparatus 1 including a working table with a work surface 2 supporting labware components, analytical testing devices and sample processing devices. Two robotic arms 3 are arranged above the work surface 2 and one arm (left) is adapted to move a pipettor 4 and the other arm (right) is adapted to move a gripper 36 in the space above the work surface 2. The pipettor 4 may include a pipetting head 5 connected to fluid supply unit or pump unit 37. The pipettor may also include an air displacement pipettor (ADP) or air restriction pipettor (ARP) for aspirating and dispensing liquids using a pipetting tip 10. An electrode 8 may be attached to the robotic arm 3 or to the pipettor 4 or to the pipetting head 5. The pipetting tip attached to the pipetting head may provide the electrode 8 (see for example figure 2). A pipetting tray 6 is positioned on the work surface 2 or on top of a spacer and/or on top of a box for holding the pipetting tray 6. The laboratory automation apparatus 1 includes a processor 7 or a computer system for controlling, for example, the movement of the robotic arms 3, the closure of gripper 36, the movement of the pipettor 4 or for controlling the fluid supply or the ARP/ARP systems coupled to the pipettor 4. A filter rack with sample tubes 28 may be positioned on the work surface 2. The processor 7 may include a storage unit a computing unit, a transceiver unit, or a communication unit. An electronic circuit connects the processor 7 to the robotic arms, the pipettor or a capacitive sensor as will be explained below. A display may be coupled to the electronic circuit and the display may include a user interface such as a touch screen.

A schematic drawing for a robotic arm 3 positioned above the work surface 2 of a laboratory automation apparatus 1 is presented in Figure 2. The work surface 2 defines an x-y plane and the robotic arm 3 is vertically distanced from the work surface defining the z-direction. The pipettor 4 and pipetting head 5 are coupled to the robotic arm 3 to be moved by the robotic arm 3 in the x-y-z space above the work surface 2. A pipetting tip 10 is attached to, or is attachable to, the pipetting head 5 of the pipettor 4. The pipetting tip 10 may be fixedly mounted to the pipettor 4 or the distal end of the pipettor includes the pipetting head 5 with an adapter for engaging a collar of a disposable pipetting tip 10. The engagement may be a friction fit or a form fit engagement. The pipetting tips 10 are preferably constructed from an at least partially electrically conductive material. The pipetting tips may be, for example made from a graphite or carbon black filled polypropylene. An at least partially conductive pipetting tip may be the electrode 8 for a capacitive sensor with a reference electrode 21. The reference electrode may include the work surface 2.

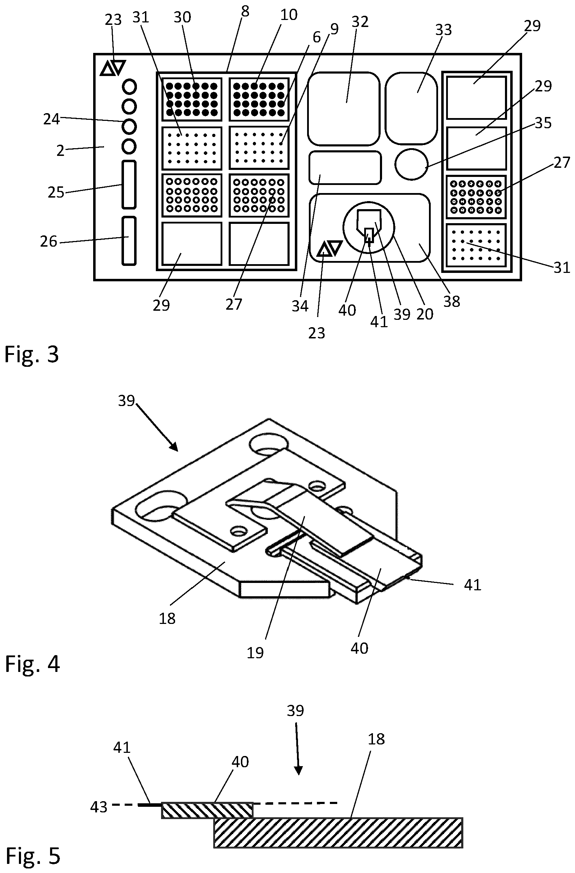

A top view on the work surface 2 with labware components, analytical testing and sample processing equipment is presented in Figure 3. The work surface 2 may include a capacitive reference object 23 that is used for calibration of the x-y position of the robotic arm 3 with respect to the work surface 2, as explained in detail in Figures 3 and 4 of US20240217102A1. The capacitive reference object may be triangular shaped. The work surface may include a plurality of positions for holding pipetting trays 6 or well plates 27. There may be "vacant positions" 29 on the work surface in that there is a space available for placing, or temporarily placing a labware component. The labware components may have a rectangular footprint according to an ANSI/SLAS standard. Microplate Standards, for example according to the 96 well-plate standard (ANSI SLAS 4-2004 (R2012): Well Positions). A 24-well plate format is presented in Figure 3. There may be pipetting trays 30 on the work surface which are at least partially filled with pipetting tips 10. The empty pipetting trays 31 include passages 9 for receiving and holding the pipetting tips 10 that may be picked up by the pipettor 4 by moving the pipettor 4 to the location of the pipetting tip and lowering the pipetting head 5 for engaging a pipetting tip 10. Sample tubes or sample holders 24 or containers for processing liquids 25 or waste containers 26 may be located on top of the work surface 2 (Figure 3) or below the work surface as presented in Figure 1. Examples for sample processing devices may be a solid phase extraction device 32, a thermocycler 33 or a mixing device 35. An example for an analytical testing device may be a microplate reading device 34 for executing absorbance, fluorescence, or luminescence measurements on the processed samples in the microplates.

For the current disclosure an analytical instrument 38 is positioned onto the work surface 2. The analytical instrument includes a sensor 39 with a sample holder 40 holding a sample 41. The sample 41 may be a micrometer sized object with a substrate surface that is coated for analytical testing. The sample 41 may be a cantilever beam 41 and the deflection or resonance at a specific resonance frequency of the cantilever is used for the analytical testing. The deflection or resonance frequency may depend on the molecules attached to the surface or on the chemical or biological reactions taking place at the surface of the cantilever beam. The deflection and resonance frequencies may be detected using optical means for example by detecting the interference between incoming and reflected laser light beams. The sensor 39 may be surrounded by a container or open cylinder 20 that may be filled with a reagent or sample liquid providing the chemical molecules required for the chemical reactions or nutrients for biological reactions. The detection of the beam deflection may be executed when the sample is submerged in the reagent or nutrient liquid. The dedicated coating of the surface described below is preferably applied before submersion into container or open cylinder. The cylinder is open from the top and available for the pipettor 4 such that chemical reagents or nutrients may be dispensed into the container using the pipettor.

A detailed view of a sensor 39 according to the prior art is disclosed in Figure 4. The sensor comprises a base plate 18 that is attachable to the bottom of the container 20 and includes the connectors for the connecting the sensor to an electronic circuitry including a microprocessor. A clip 19 fixates and biases a sample holder 40 with a micrometer sized sample or cantilever beam attached to the rim of the holder. The sample or cantilever beam has an elongated shape providing a longitudinal axis that preferably coincides with the longitudinal axis of the rectangular shaped sample holder. The sample holder 40 and the sample 41 may be made from the same material, for example by photolithographic processes using silicon. Alternatively, the sample holder is made from a metal and the cantilever beam is produced by local etching techniques. Alternatively, the beam and holder are made from different materials. The cantilever beam in this example a rectangular shaped object. The size of the cantilever in this embodiment is in the micrometer range with a longest dimension along the sample axis ranging between 10 mm and 1000 mm, preferably between 50 and 500 mm and more preferably between 100 and 300 mm. The longest dimension perpendicular to the sample axis ranges between 10 and 500 mm, preferably between 20 and 200 mm, more preferably between 30 and 100 mm. The thickness of the sample ranges between 0.2 and 10 mm, preferably between 0.4 mm and 4 mm, more preferably between 0.6 and 1 mm The aspect ratio of the rectangular shaped cantilever beam ranges between 1 and 5000. The samples are thin which is required for bending and allowing for the sensor functionality of the cantilever beam but the extremely thin samples are mechanically fragile which makes manual coating cumbersome as the samples may fracture. Moreover, the reproducibility of manual coating procedures is low leading to a high percentage of rejects during production.

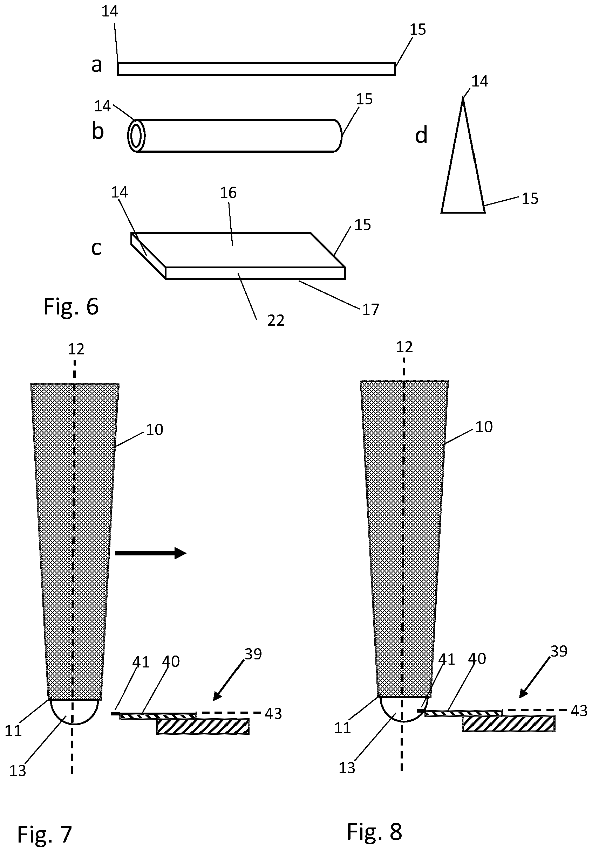

A schematic lateral view of the sensor 39 with the base plate 18 and the sample holder 40 attached thereto is presented in Figure 5. The elongated sample 41 defines the sample axis 43 running through the center of the sample. Examples for the elongated samples 41 are presented in Figure 6. Each example includes a distal end surface 14 and a proximal end surface 15 connected by a solid rod (Figure 6a), a hollow tube or capillary (Figure 6b), a rectangular plate shaped sample (Figure 6c) or by a spike or pyramid shaped sample (Figure 6d). The rectangular shaped sample includes a top surface 16, a bottom surface 17 and a rim 22 connecting the bottom to the top surface. The distal end surface 14 is part of the rim 22. The base plate 18 and therewith the sample axis 43 may be oriented parallel to the work surface for the example presented in Figures 7 and 8.

The coating process is explained in Figures 7 and 8. A droplet of the liquid is attached to the distal end 11 of the pipetting tip 10, thereby providing a hanging drop 13. The hanging drop 13 preferably has a target size or target volume in the microliter range. The pipetting tip 10 is first moved by the robotic arm 3 to a liquid container, for example liquid container 25 present on the work surface in Figure 3. A hanging drop 13 is provided by controlled dispensing of the aspirated liquid using the pipettor 4. The hanging drop may first be oversized during controlled dispensing followed by partial aspiration for adjustment to the target size. The oversized droplet may promote wetting of the distal end 11 of the pipetting tip 10. The pipetting tip axis 12 in this example is oriented perpendicular to the work surface 2 and the pipetting tip 10 with the hanging drop is moved to the location of the sensor 39 such that the hanging drop 13 is aligned with, or flush with the elongated sample or cantilever 41. The sample axis 43 is oriented perpendicular to the pipetting tip axis 12. Alternatively, the pipetting tip without a hanging drop is moved by the robotic arm to the location of the sensor and the hanging drop is locally produced in the vicinity of the sample 41 intended to be coated.

The sample or cantilever 41 is subsequently immersed into the hanging drop 13 either by moving the pipetting tip 10 in the horizontal direction towards the sensor 39 (indicated by the arrow in Figure 7), or alternatively, the sensor is moved towards the pipetting tip. The distal end 14 of the sample 41 first contacts the hanging drop 13 and finally the sample 41 is immersed into the liquid of the hanging drop 13 as presented in Figure 8. The pipetting tip 10 with the hanging drop 13 is subsequently, or after a defined holding period, retracted to the position presented in Figure 7 by moving the pipetting tip in the horizontal direction opposite to the arrow. An optional thermal or optical (curing) treatment may be executed during the holding period. The surface of the sample may be dried, and the sample may be coated with another layer of the same liquid or with a layer of a different liquid. Each layer may be dried before applying another layer and each layer may be thermally treated or optically treated or cured. The drying process may be optimized by using a local air or nitrogen flow across the sample surface.

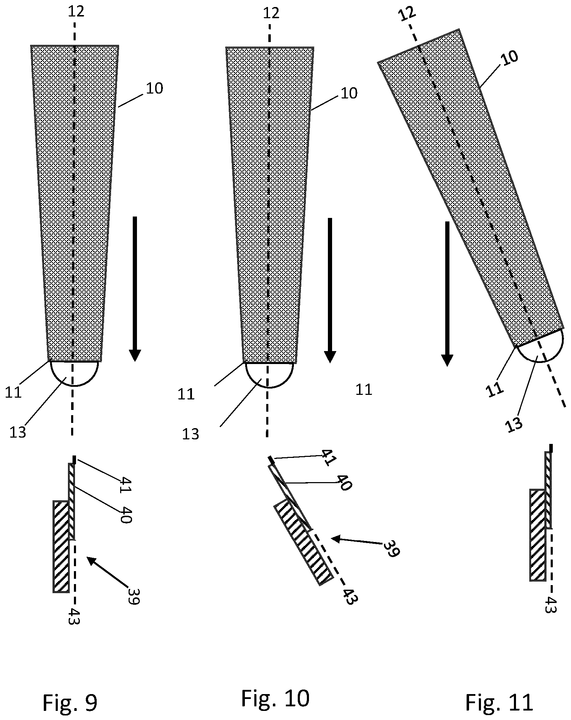

Other orientations of the sensor 39 and therewith the sample axis 43 are presented in Figures 9 and 10. The sample axis 43 may be oriented perpendicular to the work surface 2 of the laboratory automation apparatus and oriented parallel to the pipetting tip axis 12. The sample axis 43 and the pipetting tip axis 12 are aligned after moving the pipettor 4 with the pipetting tip 10 to the location of the sample 41 or location of the sensor (see Figure 9). The pipetting tip is lowered as indicated by the arrow for immersion of the sample or cantilever 41 that is co-aligned with the hanging drop 13. Alternatively, the sensor is tilted whereby the sample axis 43 is tilted with respect to the pipetting tip axis 12 as presented in Figure 10. Alternatively, the pipetting tip 10 is tilted with respect to a vertically oriented sample 41 or sensor 39 as shown in Figure 11. The sample 41 may be oriented vertical or horizontal in Figure 11. The sample or cantilever 41 is coated using the hanging drop 13 by lowering the pipetting tip 10. Alternatively, the pipetting tip with the hanging drop 12 is at a fixed z -position on the working table and the sensor 39 is raised towards the hanging drop. After the immersion, the sample is retracted from the hanging drop by a reverse movement of the pipetting tip 10 and/or the sensor 39. Or a drop is sheared off the tip by moving further along the sample axis, while a dispense and/or aspiration, may or may not be performed, in order to facilitate drop deposition, depending on the properties of the sample and the liquid.

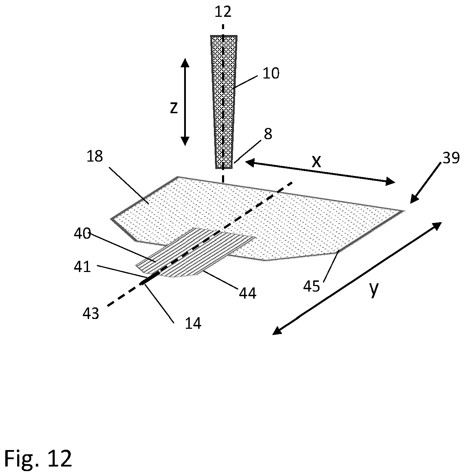

Finding the exact location of the sensor and moving the pipettor to the micrometer sized sample will be explained in the following with reference to Figure 12. The pipettor 4 includes an electrode 8 providing a capacitive sensor with a reference electrode. The capacitive sensor can detect a change in electrical impedance depending on the medium (dielectric constant) and/or distance or height of the medium present between the electrode and the reference electrode. The change in electrical impedance may be detected upon hovering over the sensor area. A source voltage may be applied to the electrode and the change of dielectric medium from air to sample holder 40 is detected while crossing the boundaries provided by the edges 44, 45. The change in impedance may be detected using charge-based or oscillation-based measuring techniques. For a charge-based technique, the charging or discharging of the capacitor may provide the feedback signal in response to the input signal (source voltage) directed to the electrode. The input signal may be directed to the electrode, or to the reference electrode, or to both the electrode and the reference electrode. The input signal or source voltage may be modulated and have different wave forms for example a sine, square, triangular, sawtooth or pulse shaped wave form. The change in charge time may be detected as an indicator for the change in impedance using dedicated sensors that are included in the electronic circuit. The input signal is preferably modulated in the kilohertz frequency range. Alternatively, the signal generator or charging unit operates in an oscillatory mode thereby partially charging and discharging the capacitive sensor. The charging and discharging of the capacitor is detected in the feedback signal and the speed for the charging and discharging depends on the impedance of the capacitor.

In the example presented in Figure 12, the pipetting tip 10 provides the electrode 8. The pipetting tip is preferably empty and may be used after the impedance scanning for the coating procedure with the hanging drop. Alternatively, a separate electrode 8 is fixated to the pipetting tip. The electrode 8 is first moved by the robotic arm to the area of interest and lowered to a reference scan height. The area of interest may be defined, for example by the wall of the sample holder 40 surrounding the sensor 39 (see Figure 3). The electrode 8 may hover over, or scan the surface of the base surface 18 and/or the sample holder 40 when moved along the x direction. The changes in impedance when moving over the edges 44,45 are detected and used to calculate the position of a central axis of the base surface 18 and/or of the sample holder 40. The base surface 18 and the sample holder 40 are mirror symmetrically designed such that the central axis equals the sample axis 43 for the elongated sample or cantilever 41. The sample axis 43 and the pipetting tip axis 12 provide a virtual plane in the y-direction oriented perpendicular to the base surface 18 which itself is oriented parallel to the work surface 2. The electrode 8 is subsequently moved to the x-coordinate of the sample axis 43 for a capacitive scan in the y-direction for detecting the edge of the sample holder 40 and or the distal end 14 of the sample or cantilever 41. The scanning steps in the x direction and y direction may be repeated for defining averaged values for the positions of the base surface 18, the sample holder 40 or the distal end 14 of sample 41. The hanging drop is subsequently provided on the distal end 11 of the pipetting tip which is moved to a position on the sample axis 43 and lowered such that an axial gap exists in the y-direction between the distal end 14 of the sample 41 and the center of the hanging drop or the center of the opening of the pipetting tip 11. The pipetting tip is moved towards the sample 41 such that the distal end 14 of the sample 41 contacts and punctures the hanging drop 13 for coating the surface of the sample. The pipetting tip is subsequently retracted.

A reference scan over a capacitive reference object 23 may be executed for the position calibration of the robotic arm, The capacitive reference object is at a known position on the work surface 2 or on the analytical instrument 38 holding the sensor 39, see Figure 3.

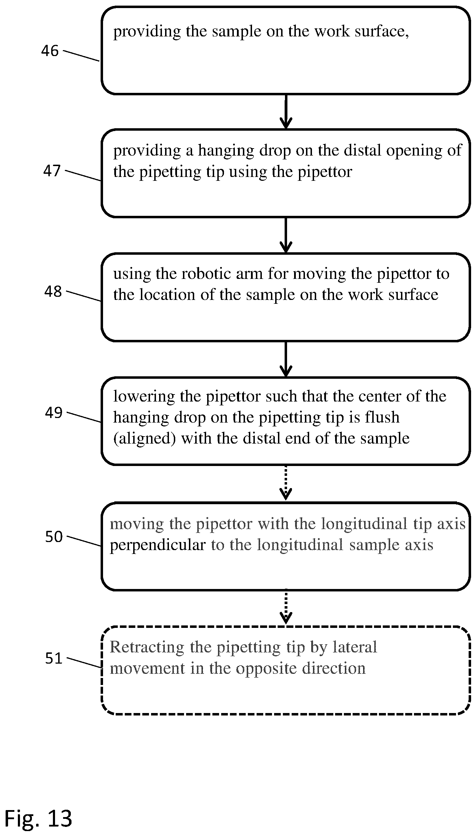

The method steps for coating the surface are depicted in Figure 13:
51, 46: Providing the sample on the work surface,
S2, 47: Providing a hanging drop on the distal opening of the pipetting tip using the pipettor,
S3, 48: Using the robotic arm for moving the pipettor to the location of the sample on the work surface,
S4, 49: Lowering the pipettor such that the center of the hanging drop on the pipetting tip is flush (aligned) with the distal end of the sample,
S5, 50: Moving the pipettor with the longitudinal tip axis perpendicular to the longitudinal sample axis.
And optionally:
S6, 51: Retracting the pipetting tip by lateral movement in the opposite direction.
After S5 or S6, the sample may be dried.
Method steps may be combined and repeated for applying multiple coatings.

### LIST OF REFERENCE SIGNS

- 1: Laboratory automation apparatus
- 2: Working table, working surface
- 3: Robotic arm
- 4: Pipettor
- 5: Pipetting head
- 6: Pipetting tray
- 7: Processor
- 8: Electrode
- 9: Passage
- 10: Pipetting tip
- 11: Distal end
- 12: Pipetting tip axis
- 13: Hanging drop
- 14: Distal end surface
- 15: Proximal end surface
- 16: Top surface
- 17: Bottom surface
- 18: Base plate
- 19: Clip
- 20: Container, cylinder
- 21: Reference electrode
- 22: Rim
- 23: Capacitive reference object
- 24: Sample tubes
- 25: Processing liquid
- 26: Waste container
- 27: Well plate
- 28: Filter plate
- 29: Vacant position
- 30: Filled tray
- 31: Empty tray
- 32: Solid phase extractor
- 33: Thermocycler
- 34: Microplate reader
- 35: Mixing device
- 36: Gripper
- 37: Pump unit
- 38: Analytical instrument
- 39: Sensor
- 40: Sample holder
- 41: Sample - cantilever
- 42: Cylinder
- 43: Sample axis
- 44: Edge
- 45: Edge
- 46: S1
- 47: S2
- 48: S3
- 49: S4
- 50: S6
- 51: S7

## Claims

1. A method for coating a surface of a sample (41) with a liquid using a pipettor (4) in a laboratory automation apparatus (1), the sample (41) having an elongated shape defining a longitudinal sample axis (43):
- the laboratory automation apparatus (1) comprises a work surface (2) and a robotic arm (3) for moving the pipettor (4) in a space above the work surface,
- the pipettor (4) comprises a tubular shaped pipetting tip (10) with a distal opening (11) for aspiration and dispensing of the liquid, the tubular shaped pipetting tip (10) defining a longitudinal tip axis (12),
the method comprises the following steps:
- providing the sample (41) on the work surface (2),
- providing a hanging drop (13) on the distal opening (11) of the pipetting tip (10) using the pipettor (4),
- using the robotic arm (3) for moving the pipettor (4) to the location of the sample (41) on the work surface (2) and lowering the pipettor such that the center of the hanging drop (13) on the pipetting tip is aligned with the distal end (14) of the sample (41),
**characterized in that** the sample (41) is coated with the liquid by moving the pipettor (4) with the longitudinal tip axis (12) perpendicular to the longitudinal sample axis (43) such that the distal end (14) of the sample (41) immerses into the hanging drop (13).

2. The method according to claim 1, wherein the elongate shaped sample (41) has an aspect ratio of at least 20, more preferably at least 50 most preferably at least 100.

3. The method according to any of the previous claims wherein the elongate shaped sample (41) is selected from a spike, a beam, a cantilever, a rod, a rectangular plate, a film, a pin, a cone, a capillary, a pyramid, a triangle or a tube.

4. The method according to any of the previous claims wherein the elongate shaped sample (41) comprises a top surface (16), a bottom surface (17) and a rim (22) connecting the bottom to the top surface and wherein the distal end (14) of the sample comprises a section of the rim (22).

5. The method according to any of the previous claims wherein moving the pipettor (4) to the location results in an intersection of the longitudinal tip axis (12) and the longitudinal sample axis (43).

6. The method according to claim 5 wherein the pipettor (4) includes an electrode (8) comprising the pipetting tip (10) thereby providing a capacitive sensor with the work surface (2) and wherein the pipetting tip (10) scans the sample (41) or a sample holder f(40) or detecting a change in capacitance for determining the location.

7. The method according to any of the previous claims wherein the hanging drop (13) is provided on the distal opening (11) of the pipetting tip (10) by aspirating and controlled dispensing of the liquid through the pipetting tip.

8. The method according to claim 7, wherein the hanging drop (13) has a target size for coating and is first oversized with respect to the target size during dispensing and subsequently reduced to the target size by partial aspiration.

9. The method according to claims 7 or 8 wherein the target size ranges between 0.2 and 10 microliters.

10. The method according to any of the previous claims wherein the longitudinal sample axis (43) is oriented parallel to the work surface or perpendicular to work surface.

11. The method according to any of the previous claims wherein multiple coatings are subsequently applied on the sample surface.

12. The method according to claim 11 wherein each of the multiple coatings is applied using the identical liquid for each coating, or wherein each of the multiple coatings is applied using a different liquid for each coating.

13. The method according to any of the previous claims wherein the liquid is a biological liquid containing bacteria.

14. The method according to claim 13 wherein the biological liquid is applied to the surface previously coated with positively charged poly-D-lysing (PDL).

15. The method according to any of the previous claims wherein the surface to be coated is part of a micrometer sized cantilever beam in a sensor (39).

16. A laboratory automation apparatus (1) configured to carry out the method according to claims 1 to 15.

17. A computer program enabling the coating of a surface of a sample with a liquid using the laboratory automation apparatus (1) of claim 16, the computer program when executed by the processor that is part of the laboratory automation apparatus is adapted to execute the method of claims 1 to 15.
